Europäisches Patentamt

European Patent Office

Office européen des brevets

(11) Veröffentlichungsnummer: **0 332 036**
**A2**

(12) **EUROPÄISCHE PATENTANMELDUNG**

(21) Anmeldenummer: **89103552.9**

(22) Anmeldetag: **01.03.89**

(51) Int. Cl.⁴: **B23B 31/04**

(30) Priorität: **10.03.88 DE 3807887**

(43) Veröffentlichungstag der Anmeldung:
**13.09.89 Patentblatt 89/37**

(84) Benannte Vertragsstaaten:
**AT BE CH DE ES FR GB IT LI LU NL SE**

(71) Anmelder: **Hertel Aktiengesellschaft**
**Werkzeuge + Hartstoffe**
**Wehlauer Str. 71-73**
**D-8510 Fürth(DE)**

(72) Erfinder: **Glaser, Franz**
**Stadtweg 29**
**D-8500 Nürnberg(DE)**

(74) Vertreter: **Tergau, Enno et al**
**Patentanwälte Tergau & Pohl Postfach 11 93**
**47 Hefnersplatz 3**
**D-8500 Nürnberg 11(DE)**

(54) **Werkzeugwechselhalter.**

(57) Die Erfindung betrifft einen Werkzeugwechselhalter für Werkzeugmaschinen mit einer rotationsgetriebenen Spindel (1,1′) und einem darauf fixierbaren, auswechselbaren Werkzeugkopf (20,20′,20″). Die rotationsgetriebene Spindel (1) ist werkzeugseitig mit einem zentralen Paßzapfen (2) mit Spannvorrichtung (3) und einer ringförmigen, diesen konzentrisch umgebenden Stirnfläche (9) versehen. Der Werkzeugkopf (20,20′,20″) weist eine zentrale Paßbohrung (23) zur Aufnahme des Spindel-Paßzapfens (2) und eine die Paßbohrung (23) zur Aufnahme des Spindel-Paßzapfens (2) und eine die Paßbohrung (23) konzentrisch umgebende, ringförmige Gegenfläche (26) auf. Stirn- (9) und Gegenfläche (26) weisen invers-kongruente, in Spannstellung formschlüssig ineinandergreifende Zentrier- und Drehmomentübertragungsmittel auf. Auf der Stirnfläche (9) der Spindel (1,1′) sind HIRTH-Verzahnungselemente (14) in mehreren, auf einem zur Spindelachse (10) konzentrischen Kreisring (11) liegenden, ringsektorförmigen Verzahnungsabschnitten (13,13′,13″) angeordnet, die durch Planflächenabschnitte (15,15′) voneinander beabstandet sind.

Fig. 1

## Werkzeugwechselhalter

Die Erfindung betrifft einen Werkzeugwechselhalter für Werkzeugmaschinen mit den im Oberbegriff des Anspruches 1 angegebenen Merkmalen.

Bekannte Werkzeugwechselhalter weisen eine rotationsgetriebene Spindel auf, die werkzeugseitig einen zentralen Paßzapfen mit Spannvorrichtung und eine ringförmige Stirnfläche aufweist. Auf der Spindel ist ein Werkzeugkopf auswechselbar fixiert, der spindelseitig eine zentrale Paßbohrung zur Aufnahme des Spindel-Paßzapfens und zu seiner axialen Spannung mittels der Spannvorrichtung aufweist. Die Paßbohrung ist von einer ringförmigen Gegenfläche konzentrisch umgeben.

Die Stirn- und Gegenfläche ist mit kongruenten, in Spannstellung ineinandergreifenden Zentrier- und Drehmomentübertragungsmitteln versehen. In diesem Zusammenhang sind zwei prinzipielle Systeme zu unterscheiden. Zum einen sind zur Spindelachse konzentrische, kreisringförmige Plananlageflächen an der Stirn- bzw. Gegenfläche von Spindel bzw. Werkzeugkopf bekannt. Die Zentrierung zwischen diesen beiden Bauteilen erfolgt durch den Eingriff des Spindel-Paßzapfens in die Werkzeugkopf-Paßbohrung. Die Drehmomentübertragung übernimmt ein Mitnehmerstein im Bereich der Stirnfläche des Paßzapfens, der in Spannstellung des Werkzeugkopfes an der Spindel in eine entsprechende Formschlußausnehmung in der Gegenfläche des Werkzeugkopfes eingreift. Die zweite bekannte Alternative sind sogenannte HIRTH-Verzahnungen im Bereich der Stirnund Gegenflächen von Spindel und Werkzeugkopf. Diese jeweils auf zur Spindelachse konzentrischen Kreisringen angeordneten Zahnreihen mit radial verlaufenden Zähnen bieten gegenüber den Plananlageflächen Vorteile hinsichtlich der Zentriergenauigkeit des Werkzeugkopfes an der Spindel sowie hinsichtlich der Drehmomentübertragung. Jedoch ist die Herstellung von Werkzeugwechselhaltern mit HIRTH-Verzahnungen mit einem weitaus höheren herstellungstechnischen Aufwand verbunden, als die Herstellung von Werkzeugwechselhaltern mit Plananlageflächen.

Die Werkzeugwechselhalter von Werkzeugmaschinen und insbesondere von sogenanten Bearbeitungszentren arbeiten mit Werkzeugköpfen, die entsprechend dem jeweiligen Anwendungszweck Werkzeuge unterschiedlichster Art tragen. Je nach dem Bearbeitungsschritt und den dabei zugelassenen Toleranzen werden unterschiedlichste Anforderungen an die Zentriergenauigkeit und Drehmomentübertragung zwischen Werkzeugkopf und Spindel gestellt. Für einen bestimmten Bearbeitungsschritt würde also ein Werkzeugwechselhalter mit Plananlageflächen genügen, während für einen anderen Bearbeitungsschritt eine HIRTH-Verzahnung von Vorteil wäre. Jedoch ist durch die Gestalt der jeweiligen Spindelstirnfläche mit entweder einer Plananlagefläche oder einer HIRTH-Verzahnung die vorgenannte Auswahlmöglichkeiten nicht gegeben.

Davon ausgehend liegt der Erfindung die Aufgabe zugrunde, einen Werkzeugwechselhalter zu schaffen, dessen Spindel die Verwendung eines Werkzeugkopfes sowohl mit Plananlageflächen als auch mit HIRTH-Verzahnungen erlaubt.

Die Lösung dieser Aufgabe ist in den kennzeichnenden Merkmalen des Anspruches 1 angegeben. Durch die beschriebene Kombination von HIRTH-Verzahnungselementen mit dazwischenliegenden Planflächenabschnitten ist die Verwendung sowohl eines Werkzeugkopfes mit Plananlageflächen, als auch eines Werkzeugkopfes mit HIRTH-Verzahnung möglich. Es kann also je nach den Anforderungen an die Zentriergenauigkeit und Drehmomentübertragung bei einem bestimmten Bearbeitungsschritt ein entsprechender Werkzeugkopf gewählt werden.

Der Einsatz des erfindungsgemäßen Werkzeugwechselhalters beispielsweise in einem Bearbeitungszentrum bringt folglich verschiedene Vorteile mit sich: Die Maschine kann an sich kostengünstiger gefertigt werden, da für Bearbeitungsschritte, bei denen geringere Anforderungen an die Zentriergenauigkeit und Drehmomentübertragung gestellt werden, einfache Werkzeugköpfe mit Plananlageflächen verwendet werden können. Das Bearbeitungszentrum kann zudem im praktischen Einsatz wirtschaftlicher arbeiten, da die Werkzeugköpfe als Verschleißteile nur jeweils entsprechend ihrem Typ ausgetauscht werden müssen. Weiterhin ist eine qualitativ hochwertige Werkstückbearbeitung mit verringertem Ausschuß gewährleistet, da für Bearbeitungsschritte mit engen Toleranzen Werkzeugköpfe mit einer HIRTH-Verzahnung verwendet werden können.

Vorteilhafte Ausgestaltungen des Erfindungsgegenstandes sind in den Unteransprüchen angegeben. So ist durch die Ausgestaltung nach Anspruch 2 gewährleistet, daß sowohl für Werkzeugköpfe mit HIRTH-Verzahnung als auch mit Planflächenanlage eine etwa gleichgroße Anlagefläche zwischen der Gegenfläche des Werkzeugkopfes und der Stirnfläche der Spindel vorhanden sind. Damit ist das Verschleißverhalten beider Spanntypen etwa gleich.

Anspruch 3 kennzeichnet einen praxisgerechten Wert für die Anzahl der Verzahnungs- und Planflächenabschnitte auf der Stirnfläche der Maschinenspindel. Damit ist zudem der Vorteil verbunden, daß die Spannung des Werkzeugkopfes in statisch bestimmter Weise erfolgt, also bei etwaigen Fertigungstoleranzen der Spannflächen ein Verkippen o.dgl. des Werkzeugkopfes gegenüber der Spindel verhindert wird.

Nach Anspruch 4 ist im Bereich eines der Planflächenabschnitte der Spindel-Stirnfläche eine in Richtung zum Werkzeugkopf über diese Stirnfläche hinausragender Mitnehmerstein lösbar befestigt. Dieser gewährleistet in an sich bekannter Weise die Drehmomentübertragung auf einen Werkzeugkopf mit Plananlageflächen. Durch die lösbare Befestigung kann der Mitnehmerstein bei der Verwendung eines Werkzeugkopfes mit HIRTH-Verzahnung ausgebaut werden, so daß auf der Gegenfläche dieses Werkzeugkopfes keinerlei Ausnehmungen zur Aufnahme des Mitnehmersteines vorhanden sein müssen.

Durch die im im Kennzeichen des Anspruches 5 angegebene Maßnahme können bei dem erfindungsgemäßen Werkzeugwechselhalter völlig herkömmliche Werkzeugköpfe mit einer kreisringförmigen Plananlagefläche und einer Kraftschlußausnehmung für den Mitnehmerstein verwendet werden, wie dies im Anspruch 8 nochmals detailliert ausgeführt ist. Wird eine vorhandene Werkzeugmaschine also mit dem erfindungsgemäßen Werkzeugwechselhalter nachgerüstet, so können zumindest die vorhandenen Werkzeugköpfe mit Plananlageflächen weiterverwendet werden.

Im Kennzeichen des Anspruches 6 ist eine alternative Ausführungsform des Erfindungsgegenstandes beschrieben, in der die Planflächenabschnitte durch mehrere, zylindrische Hartmetallstifte gebildet sind. Die beanspruchte Konstruktion ist zum einen besonders einfach, da die Planflächenabschnitte schlicht aus den Stirnflächen der Hartmetallstifte bestehen, zum anderen sind die Hartmetallstifte besonders wenig verschleißanfällig, wodurch die Spindel eine hohe Lebensdauer aufweist. Ein weiterer Vorteil dieser Ausgestaltung liegt darin, daß die Hartmetallstifte einen geringeren Anteil der Umfangslänge der Spindelstirnfläche benötigen. Dadurch steht für die HIRTH-Verzahnung eine große Umfangslänge mit entsprechend guter Zentriergenauigkeit und Drehmomentübertragung zur Verfügung.

Zu den Vorteilen der in den Ansprüchen 7 bzw. 8 angegebenen Erfindungsmerkmale wird zur Vermeidung von Wiederholungen auf die Ausführungen zu den Ansprüchen 5 bzw. 4 verwiesen.

Anspruch 9 beschreibt einen Werkzeugwechselhalter, der einen Werkzeugkopf mit HIRTH-Verzahnungsabschnitten aufweist. Letztere sind kongruent zu den HIRTH-Verzahnungsabschnitten auf der Spindelstirnfläche und stehen bezüglich der Werkzeugkopf-Gegenfläche in Richtung zur Spindel erhaben vor. In Spannstellung greifen somit nur die HIRTH-Verzahnungsabschnitte des Werkzeugkopfes und der Spindel ineinander ein, die Planflächenabschnitte der Spindel-Stirnfläche sind von den entsprechenden Teilen der Werkzeugkopf-Gegenfläche nicht beaufschlagt. Es ist darauf hinzuweisen, daß bei der Verwendung eines solchen Werkzeugkopfes der Mitnehmerstein aus der Spindel-Stirnfläche entfernt ist.

Durch die im Anspruch 10 angegebene Maßnahme können die HIRTH-Verzahnungsabschnitte auf der Spindel-Stirnfläche und gegebenenfalls auch auf der Werkzeugkopf-Gegenfläche durch spanlose Formgebung - also beispielsweise durch Pressen, Prägen oder Schmieden - hergestellt werden. Dies bringt eine erhebliche Vereinfachung und Rationalisierung gegenüber der herkömmlichen Fertigung von HIRTH-Verzahnungen mittels Schleifen oder Fräsen mit sich. Bei einem in Radialrichtung ungeteilten HIRTH-Verzahnungsabschnitt müßten jedoch unverhältnismäßig hohe Preß- bzw. Prägekräfte bei der spanlosen Formgebung angewendet werden. Darüber hinaus wäre das Fertigungsergebnis nicht befriedigend, da Balligkeiten und Unregelmäßigkeiten an den HIRTH-Zähnen auftreten würden, was zu einer ungenauen Positionierung des Werkzeugkopfes an der Spindel und einer mangelhaften Zentrierwirkung der HIRTH-Verzahnung führt. Diese Nachteile werden durch die radiale Zweiteilung der HIRTH-Verzahnungsabschnitte vermieden. Zwar ist durch die Teilnut die absolute Radiallänge der HIRTH-Zähne reduziert, die durch die Kreisringbreite der HIRTH-Verzahnungsabschnitte gegebene radiale Spannläge jedoch ist im wesentlichen unverändert. Zudem ergibt sich eine statisch bestimmte, definierte Anlage der HIRTH-Verzahnungsabschnitte des Werkzeugkopfes an denen der Spindel-Stirnfläche.

Durch die im Anspruch 11 angegebenen, in die Stirnfläche der Spindel ausmündenden Systembohrungen ist es möglich, bei dem erfindungsgemäßen Werkzeugwechselhalter verschiedene Maßnahmen zu ergreifen, durch die beispielsweise der Sitz des Werkzeugkopfes überwachbar ist oder eine Verbesserung der Zentrierwirkung und Positioniergenauigkeit erzielt wird. So kann nach Anspruch 12 die Systembohrung beispielsweise eine Leitungsbohrung für ein Reinigungsmittel zur Reinigung der Stirn- und Gegenfläche von Werkzeugkopf und Spindel beim Werkzeugwechsel sein. Bei dem Reinigungsmittel kann es sich beispielsweise um Druckluft oder um eine Spülflüssigkeit handeln. Bei einem Werkzeugwechsel wird die Leitungsbohrung etwa mit Druckluft beaufschlagt, wodurch die Verzahnungs- und Planflächenabschnitte der Stirn- und Gegenfläche beim Nähern des Werkzeugkopfes an die Maschinenspindel überblasen und damit von Verunreinigungen befreit werden.

Nach Anspruch 13 kann durch die Systembohrung die Meßleitung eines Sensorsystems durchgeführt werden, mittels dem der einwandfreie Verzahnungssitz des Werkzeugkopfes auf der Spindel kontrollierbar ist. In einer weiteren Anwendung (Anspruch 14) kann die Systembohrung eine Druckleitung für ein Druckmedium zur Überwachung des Verzahnungssitzes des Werkzeugkopfes auf der Spindel mittels einer Staudruck-Meßvorrichtung sein. Die vorstehend beschriebenen Maßnahmen führen dazu, daß eine hohe Positioniergenauigkeit und Zentrierwirkung erzielt und das Werkzeug nur eingesetzt wird, wenn es in seiner Sollage auf der Maschinenspindel sitzt.

Die Erfindung wird anhand der beiliegenden Figuren in Ausführungsbeispielen näher erläutert. Es zeigen:

Fig. 1 die Axialansicht einer Maschinenspindel in einer ersten Ausführungsform,

Fig. 2 einen Axialschnitt der Maschinenspindel entlang der Geraden II-II nach Fig. 1,

Fig. 3A eine teilweise Axialansicht eines Werkzeugkopfes mit HIRTH-Verzahnungsabschnitten in einer ersten Ausführungsform,

Fig 3B eine teilweise Axialansicht eines Werkzeugkopfes mit herkömmlicher Plananlagefläche,

Fig. 4A und B Axialschnitte des Werkzeugkopfes entlang der Geraden IV-IV nach Fig 3,

Fig 5 die Axialansicht einer Maschinenspindel in einer zweiten Ausführungsform,

Fig. 6 einen Axialschnitt der Maschinenspindel entlang der Geraden VI-VI nach Fig. 5,

Fig. 7A eine teilweise Axialansicht eines Werkzeugkopfes mit HIRTH-Verzahnungsabschnitten in einer zweiten Ausführungsform,

Fig. 7B nochmals die Axialansicht eines Werkzeugkopfes mit herkömmlicher Plananlagefläche und

Fig 8 Axialschnitte der Werkzeugköpfe entlang der Geraden VIII-VIII nach Fig 7

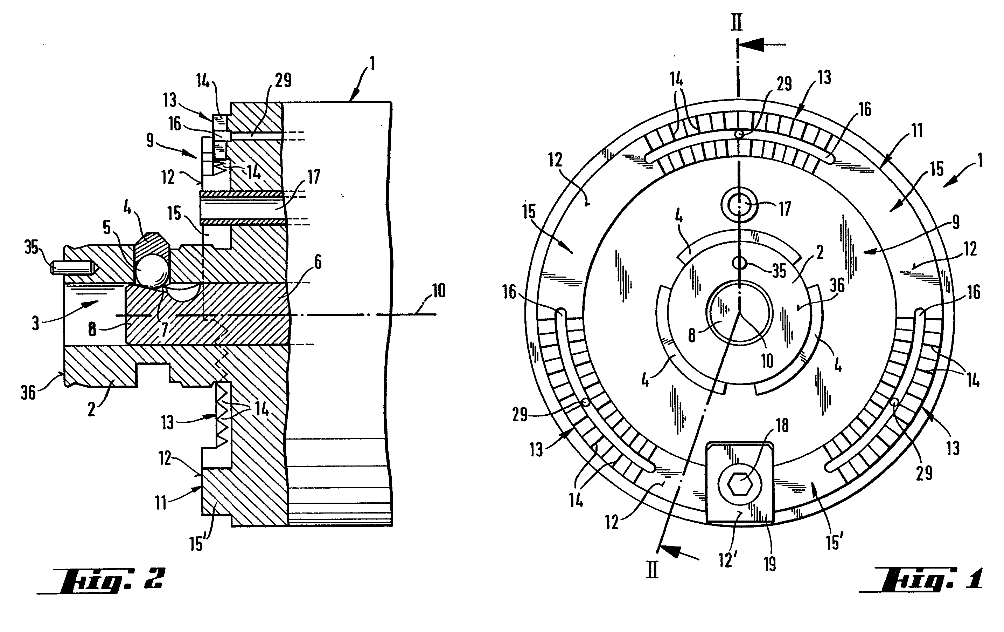

Die in den Fig. 1 und 2 gezeigte Spindel (1) einer Werkzeugmaschine weist werkzeugkopfseitig einen zentralen Paßzapfen (2) auf, der mit einer Spannvorrichtung (3) versehen ist. Letztere besteht aus einem kegelstumpfförmigen, radial nach außen verschiebbaren Eingriffsteil (4), das unter Zwischenlage einer Kugel (5) durch eine zentrale Zugstange (6) antreibbar ist. Die Bewegungsübertragung von der Zugstange (6) auf die Kugel (5) und weiter das Eingriffsteil (4) erfolgt durch eine entsprechend geformte Steuernut (7) am paßzapfenseitigen Ende (8) der Zugstange (6).

Der Paßzapfen (2) ist konzentrisch von einer ringförmigen Stirnfläche (9) umgeben, die mit ihrer Hauptebene rechtwinklig zur Spindelachse (10) angeordnet ist. Auf einem zur Spindelachse (10) konzentrischen, in Richtung Werkzeugkopf abstehenden Kreisring (11) sind bei der Spindel (1) gemäß den Fig 1 und 2 in drei ringsektorförmigen Verzahnungsabschnitten (13) HIRTH-Verzahnungselemente (14) eingeformt. Die einzelnen Verzahnungsabschnitte (13) sind durch eben falls ringsektorförmige Planflächenabschnitte (15) voneinander beabstandet. Die Verzahnungs- (13) und Planflächenabschnitte (15) sind in gleichmäßigen Winkelabständen auf dem Kreisring (11) angeordnet. Der Kreisring (11) selbst weist einen Außendurchmesser auf, der geringfügig kleiner als der Außendurchmesser der Stirnfläche (9) ist. Sein Innendurchmesser entspricht etwa dem 0,7-fachen des Stirnflächen-Außendurchmessers. Die HIRTH-Verzahnungsabschnitte (13) sind durch prägende Formgebung spanlos eingeformt, wobei durch die zur Spindelachse (10) konzentrische, die HIRTH-Verzahnungsabschnitte (13) etwa mittig radial teilende Teilnut (16) eine maßgenaue Zahnform erreicht wird

Wie insbesondere aus Fig. 2 deutlich wird, sind die Stirnflächen (12) der Planflächenabschnitte (15) der Spindel (1) gegenüber den HIRTH-Verzahnungsabschnitten (13) in Richtung zum Werkzeugkopf (20) nach vorne versetzt angeordnet. In einem Planflächenabschnitt (15') (Fig. 1) ist ein Mitnehmerstein (19) in einer entsprechenden Ausnehmung mittels einer Innensechskant-Schraube lösbar befestigt. Die Stirnfläche (12') des Mitnehmersteins (19) ragt nochmals in Richtung zum Werkzeugkopf (20) über die Stirnfläche (12) der Planflächenabschnitte (15,15') hinaus.

In den Fig. 1 und 2 ist weiterhin eine Kühlmittelleitung (17) dargestellt, die parallel zur Spindelachse (10) innerhalb des Kreisringes (11) angeordnet ist und kurz vor der Stirnfläche (12) der Planflächenabschnitte (15,15') endet

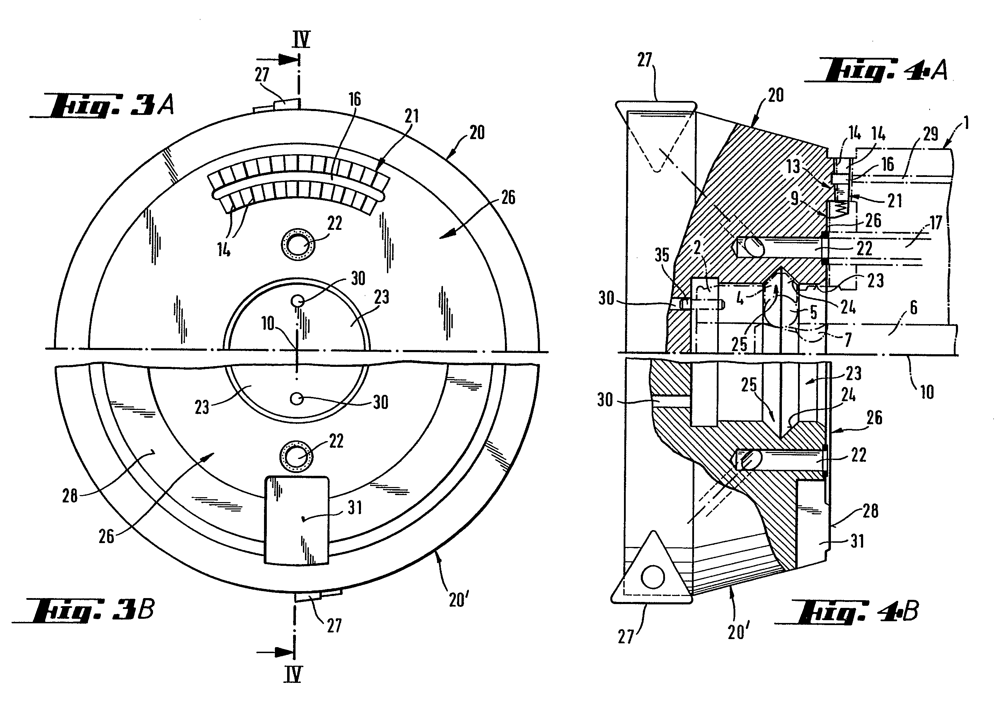

In den Fig. 3 und 4 sind Werkzeugköpfe (20,20') gezeigt, die auf der Spindel (1) fixierbar sind. Dazu weisen diese spindelseitig eine zentrale Paßbohrung (23) zur Aufnahme des Paßzapfens (2) auf. In die Paß bohrung (23) ist eine mit einer Kegelfläche (24) versehene, umlaufende Ringnut (25) eingebracht, in die das Eingriffsteil (4) des Paßzapfens (2) eingreift. Dadurch wird der Werkzeugkopf (20) axial gegen die Spindel (2) verspannt.

Die Paßbohrung (23) ist konzentrisch von einer ringförmigen Gegenfläche (26) umgeben. Bei dem Werkzeugkopf (20) nach Fig. 4A weist die Gegnfläche (26) HIRTH-Verzahnungsabschnitte (21) auf, die invers-kongruent zu den Verzahnungsabschnitten (13) des Kreisringes (11) der Spindel (1) nach den Fig. 1 und 2 sind. Durch den gegenseitigen Eingriff der Verzahnungsabschnitte (13,21) von Werkzeugkopf (20) und Spindel (1) ist eine stabile Halterung mit Selbstzentrierwirkung und hoher Positioniergenauigkeit gewährleistet. Damit die Gegenflächen (26) in den die Verzahnungsabschnitte (21) umgebenden Bereichen nicht in Anlage an die Planflächenabschnitte (15,15') der Spindel-Stirnfläche (9) geraten, sind die Verzahnungsabschnitte (21) gegenüber der Gegenfläche (26) erhaben angeordnet (Fig. 4A).

Die in die Gegenfläche (26) radial innerhalb der Verzahnungsabschnitte (21) mündende Kühlmittelleitung (22) der Werkzeugköpfe (20,20') steht in Spannstellung mit der Kühlmittelleitung (17) in der Spindel (1) in Verbindung.

In den Fig. 3B,4B,7B und 8B ist ein Werkzeugkopf (20') gezeigt, der ebenso wie der Werkzeugkopf (20) mit Schneideinsätzen (27) in Form von Wendeschneidplatten versehen ist. Der Werkzeugkopf (20') ist herkömmlich mit einer kreisringförmigen Plananlagefläche (28) versehen, die gegenüber der Gegenfläche (26) etwas, jedoch geringer als die HIRTH-Verzahnungsabschnitte (21) des Werkzeugkopfes (20) in Richtung zur Spindel (1) abstehen. Die Innen- und Außendurchmesser der ringförmigen Plananlagefläche (28) entsprechen denen des Kreisringes (11) der Spindel (1). In Spannstellung liegt die Plananlagefläche (28) des Werkzeugkopfes (20') an den Planflächenabschnitten (15,15') der Spindel (1) an. Deren Mitnehmerstein (19) greift in die Formschlußausnehmung (31) des Werkzeugkopfes (20') ein, wodurch die Drehmomentübertragung zwischen der Spindel (1) und dem Werkzeugkopf (20') gewährleistet ist.

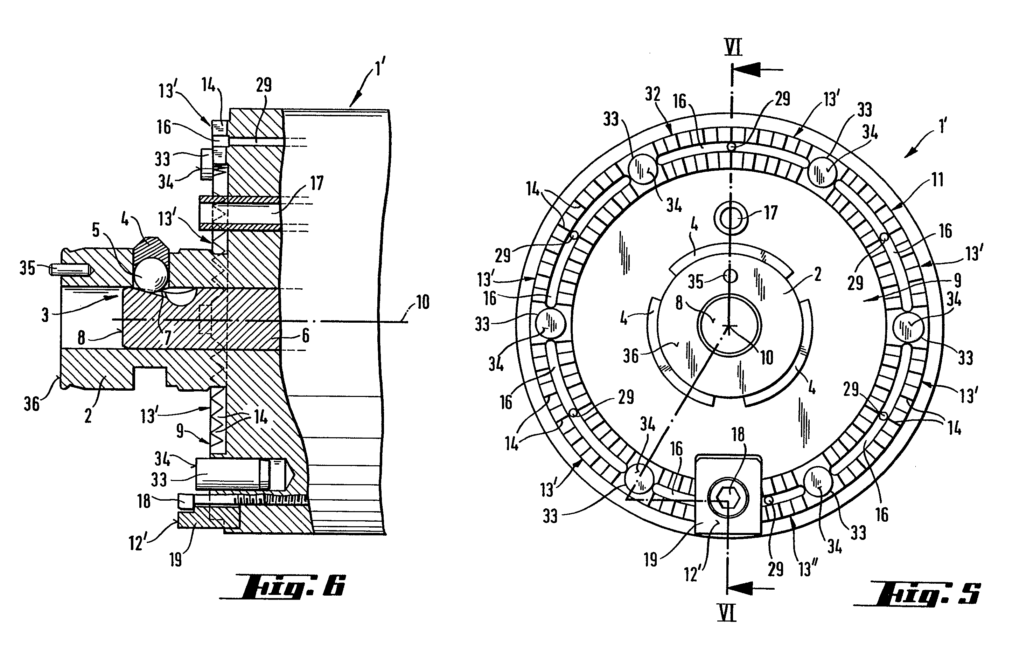

In den Fig. 5 und 6 ist eine Spindel (1') in einer zweiten alternativen Ausführungsform gezeigt. Im folgenden sollen nur die Unterschiede zu der Spindel (1) nach den Fig. l und 2 erläutert werden. Diese bestehen vor allem darin, daß eine kreisringförmige HIRTH-Verzahnung (32) vorhanden ist, in die gleichmäßig über den Umfang verteilt sechs zylindrische Hartmetallstifte (33) eingesetzt sind, die mit ihrer Zylinderachse parallel zur Spindelachse (10) liegen. Die Hartmetallstifte (33) teilen die HIRTH-Verzahnung (32) in sechs ringsektorförmige HIRTH-Verzahnungsabschnitte (13' 13") und bilden mit ihrer dem Werkzeugkopf zugewandten Stirnfläche (34) die Planflächenabschnitte zur Plananlage des Werkzeugkopfes (20') (Fig. 3B, Fig. 4B, Fig. 7B, Fig. 8B). Die HIRTH-Verzahnung (32) ist an den Einsetzstellen der Hartmetallstifte (33) unterbrochen. Deren Stirnflächen (34) ragen anlog den Planflächenabschnitten (15,15') in Richtung zum Werkzeugkopf (20') über die HIRTH-Verzahnung (32) hinaus. Zwischen zwei Hartmetallstiften (33) ist im Bereich des dazwischenliegenden Verzahnungsabschnittes (13") ein Mitnehmerstein (19) mittels einer Innensechskant-Schraube (18) lösbar befestigt.

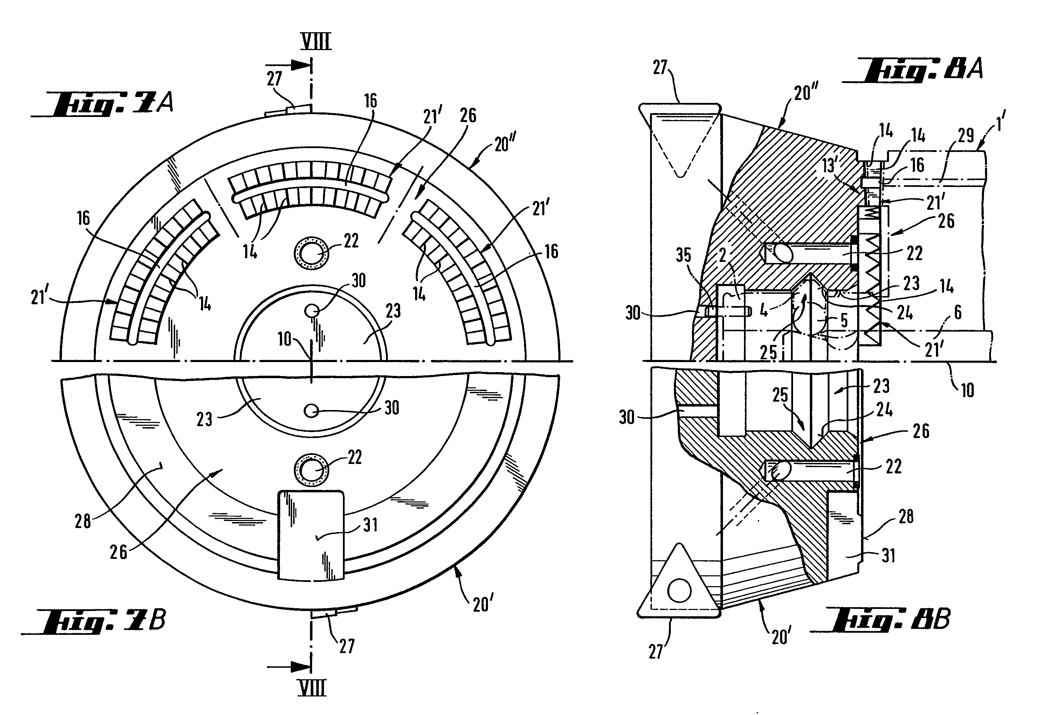

In den Fig. 7A und 8A ist ein Werkzeugkopf (20") dargestellt, der durch die Spindel (1') spannbar ist. Ersterer weist HIRTH-Verzahnungsabschnitte (21') auf, die inverskongruent zu den zwischen den Hartmetallstiften (33) liegenden Abschnitten (13') der HIRTH-Verzahnung (32) der Spindel (1') sind. Auch die HIRTH-Verzahnungssabschnitte (21') sind gegenüber der Gegenfläche (26) des Werkzeugkopfes (20') erhaben angeordnet, damit die Gegenfläche (26) in Spannstellung nicht in Anlage an die Stirnflächen (34) der Hartmetallstifte (33) gerät.

Der in den Fig. 7B und 8B dargestellte Werkzeugkopf (20') ist identisch mit dem in den Fig. 3B und 4B gezeigten Werkzeugkopf (20'). In Spannstellung liegt der Werkzeugkopf (20') an den Stirnflächen (34) der Hartmetallstifte (33) an, wobei der über die Stirnflächen (34) hinausragende Mitnehmerstein (19) wiederum in der Kraftschlußausnehmung (31) des Werkzeugkopfes (20') einliegt.

Die HIRTH-Verzahnung (32) bzw. die HIRTH-Verzahnungsabschnitte (21,21') weisen ebenfalls wieder die Teilnut (16) auf.

Es ist darauf hinzuweisen, daß bei den beiden gezeigten Ausführungsformen der Spindel (1,1') in die Teilnuten (16) Systembohrungen (29) ausmünden, die parallel zur Spindelachse (10) verlaufen. Durch diese können Sensorleitungen in den Bereich der Verzahnungsabschnitte (13,13',13") bzw. der Verzahnung (32) zur Überprüfung des Verzahnungssitzes zwischen dem Werkzeugkopf (20,20") und der Spindel (1,1') hindurchgeführt werden. Durch die Systembohrungen (29) können die Stirn- (9) und Gegenflächen (26) der Spindel (1,1') bzw. der Werkzeugköpfe (20,20',20") auch mit Druckluft beaufschlagt werden, wodurch diese Bereiche gereinigt werden können.

Durch den in Spannstellung in die Bohrung (30) am Grund der Paßbohrung (23) eingreifenden Ausrichtstift (35) an der Stirnringfläche (36) des Spindel-Paßzapfens (2) wird der jeweilige Werkzeugkopf (20,20',20") in einer definierten Winkelstellung an der Spindel (1,1') fixiert.

1,1' Spindel
2 Paßzapfen
3 Spannvorrichtung
4 Eingriffsteil
5 Kugel
6 Zugstange
7 Steuernut
8 Ende
9 Stirnfläche
10 Spindelachse
11 Kreisring
12,12' Stirnfläche
13,13',13" Verzahnungsabschnitt
14 HIRTH-Verzahnungselement
15,15' Planflächenabschnitt
16 Teilnut
17 Kühlmittelleitung
18 Innensechskant-Schraube
19 Mitnehmerstein
20,20',20" Werkzeugkopf
21,21' HIRTH-Verzahnungsabschnitt

22 Kühlmittelleitung
23 Paßbohrung
24 Kegelfläche
25 Ringnut
26 Gegenfläche
27 Schneideinsatz
28 Plananlagefläche
29 Systembohrung
30 Bohrung
31 Formschlußausnehmung
32 HIRTH-Verzahnung
33 Hartmetallstift
34 Stirnfläche
35 Ausrichtstift
36 Stirnringfläche

**Ansprüche**

1. Werkzeugwechselhalter für Werkzeugmaschinen mit
- einer rotationsgetriebenen Spindel (1,1'), die werkzeugseitig
-- einen zentralen Paßzapfen (2) mit Spannvorrichtung (3) und
-- eine ringförmige, diesen konzentrisch umgebende, mit ihrer Ebene im wesentlichen rechtwinklig zur Spindelachse (10) angeordnete Stirnfläche (9) aufweist und
- einem auf der Spindel (1,1') fixierbaren, auswechselbaren Werkzeugkopf (20,20',20"), der spindelseitig
-- eine zentrale Paßbohrung (23) zur Aufnahme des Spindel-Paßzapfens (2) und zur axialen Spannung des Werkzeugkopfes (20,20',20") mittels der Spannvorrichtung (3) sowie
-- eine ringförmige, die Paßbohrung (23) konzentrisch umgebende Gegenfläche (26) aufweist, wobei die Stirn- (9) und Gegenfläche (26) kongruente, in Spannstellung ineinander-greifende Zentrier- und Drehmomentübertragungsmittel aufweisen,
dadurch gekennzeichnet,
daß auf der Stirnfläche (9) der Spindel (1,1') HIRTH-Verzahnungselemente (14) in mehreren, auf einem zur Spindelachse (10) konzentrischen Kreisring (11) liegenden, ringsektorförmigen HIRTH-Verzahnungsabschnitten (13,13',13") angeordnet sind, die durch Planflächenabschnitte (15,15') voneinander beabstandet sind.

2. Werkzeugwechselhalter nach Anspruch 1,
dadurch gekennzeichnet,
daß die HIRTH-Verzahnungs- (13,13',13") und Planflächenabschnitte (15,15') des Kreisringes (11) bezogen auf den Ringumfang gleichmäßig verteilt sind und einander etwa entsprechende Umfangslängen aufweisen.

3. Werkzeugwechselhalter nach Anspruch 1 oder 2,
dadurch gekennzeichnet,
daß jeweils drei Verzahnungs- (13) und Planflächenabschnitte (15,15') abwechselnd auf dem Kreisring (11) angeordnet sind.

4. Werkzeugwechselhalter nach Anspruch 3,
dadurch gekennzeichnet,
daß im Bereich eines (15') der Planflächenabschnitte (15) der Spindelstirnfläche (9) ein in Richtung zum Werkzeugkopf (20,20',20") über die Stirnfläche (9) hinausragender Mitnehmerstein (19) lösbar befestigt ist.

5. Werkzeugwechselhalter nach einem der vorgenannten Ansprüche,
dadurch gekennzeichnet,
daß die Stirnflächen (12) der Planflächenabschnitte (15,15') der Spindel (1) gegenüber den HIRTH-Verzahnungabschnitten (13,13',13") in Richtung zum Werkzeugkopf (20,20',20") nach vorne versetzt angeordnet sind.

6. Werkzeugwechselhalter nach Anspruch 1 und 5,
dadurch gekennzeichnet,
daß die Stirnfläche (9) der Spindel (1) eine kreisringförmige HIRTH-Verzahnung (32) aufweist, in die mehrere, zylindrische Hartmetallstifte (33) über den Umfang des Kreisringes (11) gleichmäßig verteilt angeordnet sind, die
- mit ihrer Zylinderachse parallel zur Spindelachse (10) liegen und
- mit ihrer dem Werkzeugkopf (20,20',20") zugewandten Stirnfläche (34) die Planflächenabschnitte (15) bilden.

7. Werkzeugwechselhalter nach Anspruch 6,
dadurch gekennzeichnet,
daß im Bereich eines HIRTH-Verzahnungsabschnittes (13') der HIRTH-Verzahnung (32) vorzugsweise mittig zwischen zwei Hartmetallstiften (33) ein in Richtung zum Werkzeugkopf (20,20',20") über deren Stirnflächen (34) hinausragender Mitnehmerstein (19) lösbar befestigt ist.

8. Werkzeugwechselhalter nach einem der Ansprüche 5 bis 7,
dadurch gekennzeichnet,
daß mit der Spindel (1,1') ein herkömmlicher, eine kreisringförmige Plananlagefläche (28) und eine Formschlußausnehmung (31) für den Mitnehmerstein (19) aufweisender Werkzeugkopf (20') spannbar ist.

9. Werkzeugwechselhalter nach einem der vorgenannten Ansprüche,
gekennzeichnet durch
einen Werkzeugkopf (20,20"), der zu der HIRTH-Verzahnung (32) bzw. zu den HIRTH-Verzahnungsabschnitten (13,13',13") der Spindel (1,1') inverskongruente HIRTH-Verzahnungsabschnitte (21,21') aufweist, die bezüglich seiner Gegenfläche (26) in Richtung zur Spindel (1,1') derart erhaben vorstehen, daß in Spannstellung der Planflächenabschnitte (15,15', Stirnflächen 34) der Spindel (1,1') nicht beaufschlagt sind.

10. Werkzeugwechselhalter nach einem der vorgenannten Ansprüche,
dadurch gekennzeichnet,
daß die HIRTH-Verzahnungsabschnitte (13,13',13",-21,21') bzw. die HIRTH-Verzahnung (32) auf der Spindel-Stirnfläche (9) und gegebenenfalls auf der Werkzeugkopfgegenfläche (20) durch eine zur Spindelachse (10) konzentrische, schmale, ringförmige Teilnut (16) jeweils in radialer Richtung zweigeteilt sind.

11. Werkzeugwechselhalter nach einem der vorgenannten Ansprüche,
dadurch gekennzeichnet,
daß in die Stirnfläche (9) der Spindel (1) im Bereich der HIRTH-Verzahnung (32) der Verzahnungs-(13,13'), Planflächenabschnitte (15,15') oder der Teilnut (16) mindestens eine die Spindel (1) vorzugsweise parallel zu ihrer Achse (10) durchsetzende Systembohrung (29) ausmündet.

12. Werkzeugwechselhalter nach Anspruch 11,
dadurch gekennzeichnet,
daß die Systembohrung eine Leitungsbohrung für ein Reinigungsmittel zur Reinigung der Stirn- (9) und Gegenfläche (26) von Spindel (1,1') und Werkzeugkopf (20,20',20") beim Werkzeugwechsel ist.

13. Werkzeugwechselhalter nach Anspruch 11,
dadurch gekennzeichnet,
daß die Systembohrung (29) eine Durchführungsbohrung für Meßleitungen eines Sensorsystems ist, mittels dem der einwandfreie Verzahnungssitz des Werkzeugkopfes (20,20") auf der Spindel (1,1') kontrollierbar ist.

14. Werkzeugwechselhalter nach Anspruch 11,
dadurch gekennzeichnet,
daß die Systembohrung (29) eine Druckleitung für ein Druckmedium zur Überwachung des Verzahnungssitzes des Werkzeugkopfes (20,20") auf der Spindel (1,1') mittels einer Staudruck-Meßvorrichtung ist.

Fig. 1

Fig. 2

Fig. 3A

Fig. 3B

Fig. 4A

Fig. 4B

EP 0 332 036 A2

**Fig. 5**

**Fig. 6**

**Fig. 6A**

**Fig. 6B**

**Fig. 7A**

**Fig. 7B**